# EUROPEAN PATENT SPECIFICATION

(11) **EP 3 596 809 B1**
(45) Date of publication and mention of the grant of the patent: **07.06.2023**
(21) Application number: 18717137.6
(22) Date of filing: 14.03.2018
(51) Int. Cl.: H02K 11/00, H01F 37/00, H02M 1/00

(54) **CURRENT BALANCING CIRCUIT FOR ELECTRIC MACHINES**
STROMSYMMETRIERUNGSSCHALTUNG FÜR ELEKTRISCHE MASCHINEN
CIRCUIT D'ÉQUILIBRAGE DE COURANT POUR MACHINES ÉLECTRIQUES

(30) Priority: 15.03.2017 IT 201700028691
(43) Date of publication of application: 22.01.2020
(73) Proprietor: S.E.A. SOCIETA' ELETTROMECCANICA ARZIGNANESE S.P.A., 36071 Arzignano (VI) (IT)
(72) Inventor: CERETTA, Claudio, 36071 Arzignano (VI) (IT)
(74) Representative: Burchielli, Riccardo
(86) International application number: PCT/IT2018/050041
(87) International publication number: WO 2018/167810

(56) References cited:
- EP-A1- 2 852 038
- DE-A1-102008 032 666
- GB-A- 2 256 532
- JP-A- 2002 198 235
- US-A1- 2007 279 022

## Description

The present invention refers generally to a current balancing or compensating circuit for electrical machines.

More particularly, the invention relates to an electric circuit, which allows to uniformly distribute the current in two or more cables, for power circuits and electrical applications that require high current intensities, such as transformers, rotating machines and power lines.

In direct current applications, the current is uniformly distributed on the surface of a conductor and the losses are inversely proportional to the cross-section of the conductor used.

In particular, the value of losses is directly proportional to the inverse of the cross-section of the conductor; an increase in the cross-section of the conductor leads to a reduction in the value of losses.

This fact is also true in AC applications without prejudice to:
- an uneven distribution of the current in the section (skin effect);
- an uneven current distribution in parallel paths.

On the other hand, in AC applications, for magnetic effects, the current intensity is never constant in the sections of the conductor used with thickening of the above said current intensity near the surface of the conductor.

It follows that in applications requiring high current intensities it is not possible to increase the cross-section of conductor in an indefinite way without detecting a reduction less than the proportional decrease in losses due to non-uniform use of the section.

For this reason, it is necessary to divide the current in several paths in parallel, in order to utilize better the surface of the conductors.

However, the division of the current through several paths determines the fact that the parallel conductors do not always physically embrace the same flow and minimal variations of this flow create parasitic voltages which cause the current to not evenly divide between the parallel paths. Because of this non-uniformity of current distribution, some conductors are crossed by higher current intensities and consequently cause greater losses (said internal circulation losses).

This problem, known for some time and particularly felt in the electrical applications of transformers, rotating machines and power lines, was first solved using the transpositions and subsequently introducing special multipath conductors (transposed cables).

An example of transposition of the conductors is illustrated in detail in the patent document US2829355, which refers in particular to a circuit solution applied to transformers.

These known circuit solutions allow the electrical conductors to embrace the same flow by suitably changing the geometric position of the same so that an average compensation occurs and therefore the current can be equally distributed between the conductors in parallel.

However, the use of the circuit transpositions of the conductors and/or the use of the transposed cables entail considerable drawbacks, since they require a suitable design and usually require space and increase the overall dimensions of the machine.

Furthermore, transpositions to be effective must be done correctly and are often very expensive and time-consuming.

Finally, they often depend on the type of wrapping that is to be carried out and are often the object of errors made by operators.

An electric machine comprising a balancing circuit having the technical features of the preamble of the appended claim 1 is known, for example, from the prior art patent documents DE102008032666A1, EP2852038A1, GB2256532A, JP2002198235A and US2007/279022A1.

The object of the present invention is therefore to obviate the drawbacks of the prior art mentioned above and, in particular, to provide a circuit for balancing or compensating currents for electrical machines, which allows the current to be uniformly distributed in two or more cables in parallel with greater efficiency and lower costs and overall dimensions compared to the known art.

This and other objects are achieved by a combination of an electrical machine with an associated circuit for uniformly balancing AC currents, according to the attached claim 1.

Advantageously, the circuit solution proposed in the present invention allows, by means of a specific component, to obtain that in two or more cables in parallel both the same current of a cable generate a greater or less induced voltage such as to reduce to zero the total decompensation and ensure that the current is uniformly distributed in the two or more electric cables.

Moreover, the component can impose a current distribution of any intensity ratio, such as to allow to completely parallel cross-sections of the conductor in parallel and to impose a predetermined and pre-calculated current intensity thereof, which is a function of the current intensity itself for each path.

In practice, it is possible, for example, to place two conductors in parallel, one with a double cross-section with respect to the other, and to impose that the current distribution is also double simply by properly dimensioning the component.

This situation can occur in practice as a special case if there are three conductors in parallel; with a first component the current is balanced between the first two conductors, while with a second component it is necessary that the third conductor is crossed by a current halved with respect to the sum of the first two, thus effectively dividing the current by 3. Further objects and advantages of the present invention will become clear from the following description, which refers to exemplary and preferred but not limitative embodiments of the circuit of compensation for electrical machines in question, and from the annexed drawings, in which:
- figure 1 is a schematic drawing of a first embodiment of a circuit of compensation for electrical machines, with two conductors, according to the present invention;
- figure 2 is a schematic drawing of a second embodiment of a circuit of compensation for electrical machines, with three conductors, according to the present invention;
- fig. 3 is a schematic drawing of an alternative embodiment of the circuit of compensation for electrical machines with many conductors according to the present invention.

With reference to the aforementioned figures, which represent in particular the simplified equivalent circuits of a generic electrical machine, such as a transformer, a rotating machine and/or a three-phase electric line, with 1, 2, 3 and 4 electric conductors are indicated, in parallel, inside which flow the relative currents I1, I2, I3, I4, while with L1, L2, L3, L4 indicates the corresponding impedances corresponding to the losses, which, as seen, are proportional to the section of the electrical conductor 1, 2, 3, 4 employed. According to the present invention, it is envisaged to provide an adequate component to be placed in series with conductors 1, 2, 3, 4 (placed in parallel to each other) capable of canceling the flow of unbalance current and allowing to obtain the same flow current in the various conductors 1, 2, 3, 4.

As shown in the attached figures, the proposed component consists of a circuit or rigid magnetic coupling M, which includes two coupled and inverted windings; This component consists of a transformer or a magnetic ballast.

The flow that runs through the magnetic circuit M is imposed by the relation between the currents I1, I2 and I3, I4 to be compensated and the actual realization of the paths with respect to the magnetic circuit M.

The field produced by each path obeys the relation N * I = R * Ø and the sum of all the products N * I is equal to zero, where N represents the number of turns of the magnetic component M present along the path traveled by the generic current I and N * I represent the magneto-motive force produced by each path; in particular, therefore, N1 * I1 = N2 * I2 = N3 * I3 = N4 * I4 = R * Ø = 0 (where N1 are the turns of the magnetic circuit M present along the conductor 1 traveled by the current I1, N2 are the turns of the magnetic circuit M present along the conductor 2 traveled by the current I2, N3 are the turns of the magnetic circuit M present along the conductor 3 traveled by the current I3 and N4 are the turns of the magnetic circuit M present along the conductor 4 traveled by the current I4).

The aforementioned relationship is at the basis of the operation of various devices, such as transformers and measuring transformers, and allows the construction of an innovative system (using practically a ballast in series with conductors 1, 2, 3, 4 places in parallel) able to solve the disadvantages mentioned above.

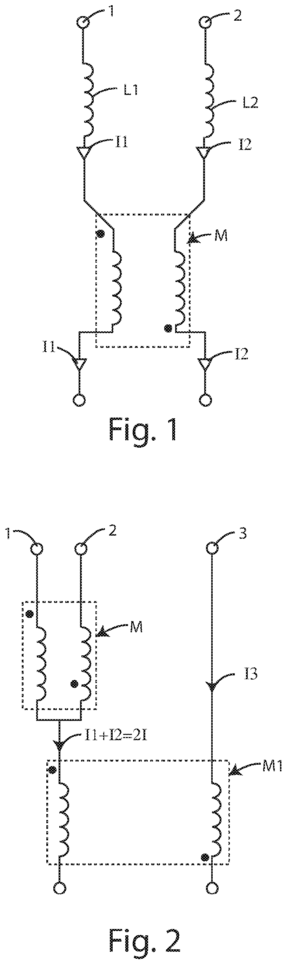

In fact, with reference to fig. 1 in the annex, which shows two conductors 1, 2 in parallel, we have that N1 * I1 + N2 * I2 = 0, from which it results that, to obtain I1 = I2 = I, in absolute value, it is necessary that in the magnetic circuit M, it has N1 = N2 (i.e. a ratio 1: 1 between the turns N of the windings of the circuit M, while the equality between the directions of the currents I1 and I2 is obtained by reversing the windings present in the magnetic circuit M).

Referring to fig. 2 in the annex, which shows three conductors 1, 2, 3 in parallel (and is similarly extensible to an odd number of conductors in parallel), one has I1 = I2 = I using the first magnetic circuit M as described above ; then I1 + I2 = 2 * I and, according to the relation Σ (N * I) = 0 applied to the magnetic circuit M1, also 2 * I * N1 = I3 * N2, from which, so that I = I3, we have that 2 * N1 = N2. It follows that, in order to obtain the same current in the three conductors 1, 2 and 3, it is necessary to size the magnetic circuit M with a coil turns ratio 1: 1 (with the inversion of the windings) and the magnetic circuit M1 with a coil turns ratio of 2: 1 (always with the inversion of the windings).

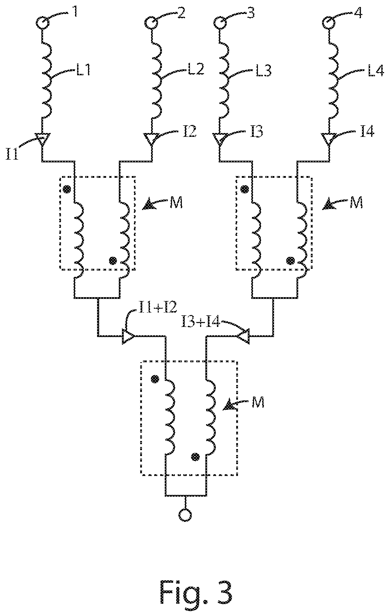

Finally, with reference to fig. 3 in the annex, which shows four conductors 1, 2, 3, 4 in parallel and which is similar to an even number of conductors in parallel, we obtain that, in order to obtain I1 = I2, I3 = I4 and I1 + I2 = I3 + I4, all the magnetic circuits M used must have a coil turns ratio of 1: 1 and the inversion of the respective windings.

In practice it has been found that by adopting the solution circuit, object of the present invention the current is uniformly distributed in the two or more electric conductors 1, 2, 3, 4, obtaining a drastic reduction of the losses of the electric machine employed with, at the same time, an evident reduction of dimensions and costs of construction and operation.

In particular, the proposed circuit system, being not a geometrical but a semi-active function, maintains the distribution of the currents, even if there are external variations in the distribution of flow between the conductors; this phenomenon can occur, for example, in the variation of the field distribution in the transformers due to the load current of third windings and/or in the variation of the inductance and mutual inductance conditions in the power lines due to different electromagnetic couplings not foreseeable at prior and compensated with known systems.

Finally, the proposed circuit system is applicable not only to parallel conductors but also to complete parallel systems. A typical example is the distribution of the currents in different portions of a winding or different windings, a typical case of machines with very high currents in which there are many parallel windings (such as furnace transformers); in such machines, without using the component according to the invention, the current is never uniform in the windings in parallel and, therefore, the control of the distribution of the current between multiple windings is fundamental and often determines its sizing. The circuit solution, an object of the present invention achieves these objects and drastically reduces costs and overall dimensions.

Another example of use is that of electric lines, which, although in parallel, run topologically different paths and for this reason are not uniformly loaded giving considerable problems in load distribution and losses, as well as different windings or different coils internal of stator or rotor packs of rotating machines, which, being in parallel, must be run by the same current.

Furthermore, the circuit system according to the present invention can be of use in low voltage energy distribution systems, since in such systems frequent conductor bars are used in parallel (for example, the output bars of the large transformers), in the which the current distribution is not uniform and the system according to the invention can compensate the phenomenon and increase the energy efficiency of the plants.

As already mentioned, also in all these systems the technique of transposition is currently used by means of suitable joints, which are very expensive and cumbersome and which often do not fully give the desired result.

The compensation of the currents obtainable with the circuit solution, object of the present invention can be used analogously and with the same advantages mentioned previously in other applications, such as the bus-bar connections, the bars of the electrical panels or the like (in this case, if the circuits to compensate are far away it is possible to use a double-core system with a possible connector, which is modular, practical, easy to install along the bars and can be produced in series).

From the description made, the characteristics of the compensation circuit for electric machines are clear, which is the object of the present invention, as well as the advantages, are clear.

In particular, these advantages are determined by:
- use of only internal forces, as it is not foreseen the use of external generators or other power sources outside the two or more paths to be controlled;
- direct coupling to the controlled circuit;
- passive system;
- magnetic circuit calculable on the basis of the residual (uncompensated) dispersed flow of the system.

Finally, it is clear that many other variations can be made to the compensation circuit in question, without departing from the novelty principles of the inventive idea as indicated in the appended claims, as it is clear that in the practical embodiment of the invention, the materials, the shapes and the dimensions of the illustrated details may be any according to the requirements and they can be replaced with other technically equivalent ones.

## Claims

1. Combination of an electrical machine with an associated compensation device for uniformly balancing AC currents (I1, I2, I3, I4), wherein said electrical machine comprises electrical conductors (1, 2, 3, 4) having respective impedances (L1, L2, L3, L4) and wherein AC currents (I1, I2, I3, I4) circulate in each of said electrical conductors (1, 2, 3, 4), said electrical conductors (1, 2, 3, 4) being connected in parallel in said electrical machine, **characterized in that** said compensation device comprising at least one transformer or magnetic ballast (M, M1), wherein each transformer or magnetic ballast (M, M1) includes two magnetically coupled inverted windings having coil turns ratio (N1, N2, N3, N4) of 1:1 or 2:1, said windings being electrically connected in parallel to each other at one end thereof and wherein the first winding of a first one transformer or magnetic ballast (M, M1) is connected in series with one of said electrical conductors (1, 2, 3, 4) at a first end,
the second winding of the first transformer or magnetic ballast (M , M1) is connected in series with a second electrical machine conductor 1,2,3, 4),
the second ends of both windings of the first transfomer or magnetic ballast (M,M1) are connected to a first winding of a second transformer or magnetic ballast (M,M1), and wherein the second winding of the second transformer or magnetic ballast (M,M1) is connected in series with a third electrical machine conductor (1, 2, 3, 4),

## Patentansprüche

1. Kombination einer elektrischen Maschine mit einer assoziierten Kompensationsvorrichtung zum gleichförmigen Ausgleichen von Wechselströmen (I1, I2, I3, I4), wobei die elektrische Maschine elektrische Leiter (1, 2, 3, 4) umfasst, die jeweilige Impedanzen (L1, L2, L3, L4) aufweisen und wobei Wechselströme (I1, I2, I3, I4) in jedem der elektrischen Leiter (1, 2, 3, 4) fließen, wobei die elektrischen Leiter (1, 2, 3, 4) in der elektrischen Maschine parallel geschaltet sind, **dadurch gekennzeichnet, dass** die Kompensationsvorrichtung mindestens einen Transformator oder ein magnetisches Vorschaltgerät (M, M1) umfasst, wobei jeder Transformator oder jedes magnetische Vorschaltgerät (M, M1) zwei magnetisch gekoppelte invertierte Wicklungen beinhaltet, die ein Spulenwindungsverhältnis (N1, N2, N3, N4) von 1:1 oder 2:1 aufweisen, wobei die Wicklungen an einem Ende davon elektrisch parallel zueinander geschaltet sind, und wobei die erste Wicklung eines ersten Transformators oder magnetischen Vorschaltgeräts (M, M1) an einem ersten Ende mit einem der elektrischen Leiter (1, 2, 3, 4) in Reihe geschaltet ist, die zweite Wicklung des ersten Transformators oder magnetischen Vorschaltgeräts (M, M1) in Reihe mit einem zweiten elektrischen Leiter (1, 2, 3, 4) der elektrischen Maschine geschaltet ist, die zweiten Enden beider Wicklungen des ersten Transformators oder magnetischen Vorschaltgeräts (M, M1) mit einer ersten Wicklung eines zweiten Transformators oder magnetischen Vorschaltgeräts (M, M1) verbunden sind, und wobei die zweite Wicklung des zweiten Transformators oder magnetischen Vorschaltgeräts (M, M1) in Reihe mit einem dritten elektrischen Leiter (1, 2, 3, 4) der elektrischen Maschine geschaltet ist.

## Revendications

1. Combinaison d'une machine électrique avec un dispositif de compensation associé pour équilibrer uniformément les courants alternatifs AC (I1, I2, I3, I4), dans laquelle ladite machine électrique comprend des conducteurs électriques (1, 2, 3, 4) ayant des impédances respectives (L1, L2, L3, L4) et dans laquelle des courants alternatifs AC (I1, I2, I3, I4) circulent dans chacun desdits conducteurs électriques (1, 2, 3, 4), lesdits conducteurs électriques (1, 2, 3, 4) étant connectés en parallèle dans ladite machine électrique, **caractérisé par le fait que** ledit dispositif de compensation comprend au moins un transformateur ou un ballast magnétique (M, M1), dans lequel chaque transformateur ou ballast magnétique (M, M1) comprend deux enroulements inversés couplés magnétiquement ayant un rapport de tours de bobine (N1, N2, N3, N4) de 1:1 ou 2:1, lesdits enroulements et connectés électriquement en parallèle à leur extrémité, et dans lequel le premier enroulement d'un premier transformateur ou ballast magnétique (M, M1) est connecté en série avec l'un des conducteurs électriques (1, 2, 3, 4) à une première extrémité, le deuxième enroulement du premier transformateur ou ballast magnétique (M , M1) est connecté en série avec un deuxième conducteur de machine électrique (1, 2, 3, 4), les deuxièmes extrémités des deux enroulements du premier transformateur ou ballast magnétique (M, M1) sont connectées à un premier enroulement d'un deuxième transformateur ou ballast magnétique (M, M1), et dans lequel le deuxième enroulement du deuxième transformateur ou ballast magnétique (M, M1) est connecté en série avec un troisième conducteur de machine électrique (1, 2, 3, 4).
